Europäisches Patentamt

European Patent Office

Office européen des brevets

(19)

(11) **EP 1 333 562 A1**

(12) # EUROPEAN PATENT APPLICATION

(43) Date of publication:
**06.08.2003 Bulletin 2003/32**

(51) Int Cl.$^7$: **H02M 1/00**, G05B 19/07,
H02M 3/158

(21) Application number: **02425054.0**

(22) Date of filing: **05.02.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Magnetek S.p.A.**
**52028 Terranuova Bracciolini (Arezzo) (IT)**

(72) Inventors:
• **Bucci, Tiberio**
**50010 Scandicci, Firenze (IT)**

• **Canova, Antonio**
**52025 Montevarchi, Arezzo (IT)**
• **Silvestri, Giovanni**
**57023 Cecina, Livorno (IT)**

(74) Representative: **Mannucci, Michele et al**
**Ufficio Tecnico Ing.A. Mannucci S.R.L,**
**Via della Scala 4**
**50123 Firenze (IT)**

(54) **Converter with output current reading circuit**

(57)     The DC/DC converter comprises: an electronic chopper ($Q_5$) which is periodically switched to control the voltage generated by the converter on a load ($R_L$) and a detection circuit (11) detecting the current output from the converter and generating an alarm signal when the output current exceeds a threshold value. The detection circuit is connected to the terminals of the electronic chopper, detects the voltage drop across the electronic chopper during the conduction phases of the chopper and generates an essentially direct signal, whose value is a function of said voltage drop.

Fig.1

**EP 1 333 562 A1**

**Description**

Field of the invention

The invention relates to a DC/DC converter for powering a load with an essentially direct voltage, including an output current reading circuit, which is capable of either interrupting the operation of the circuit or anyhow generating an alarm signal when the output current exceeds a settable threshold value.
More specifically, the invention particularly relates to a buck or step-down converter.

Prior art

Converters of this kind present an electronic chopper, typically a p-channel MOSFET, the switching of which is driven by a PWM signal, to regulate the voltage supplied to the load. An overcurrent protection circuit is required for converters of this type to avoid damage if the current exceeds appropriately set threshold values.

Object and summary of the invention

Object of the present invention is a DC/DC converter of the type above, in which overcurrent protection can be obtained by means of a particularly simple configuration which does not require either additional current reading resistors nor current transformers. Indeed, the first negatively effect efficiency of the converter causing power dissipation and the second increase cost and size of the converter.
Essentially, the invention is based on the concept that voltage drop at the chopper terminals may be used to generate a substantially direct signal, whose value is in relation to the output current, which can be used as an alarm signal when the direct current exceeds a predetermined threshold value. The alarm signal can be directly used to inhibit operation of the converter, for example by bringing at zero the PWM control signal of the chopper.
In practice, the converter comprises in combination an electronic chopper, whose periodical switching is controlled to regulate the power output by the converter to a load, and a detection circuit for detecting the current output by the converter, which generates an alarm signal when the output current exceeds a threshold value. The detection circuit is connected to the terminals of the electronic chopper, detects voltage drop at the terminals of said chopper during the conduction phases of the chopper and generates an essentially direct signal, whose value is a function of said voltage drop (and consequently of the current output to the load).
The current detection circuit practically presents means for generating an alarm signal, when said essentially direct signal exceeds a predetermined value. The alarm signal can be a chopper inhibition signal, e.g. a signal which acts on the chopper drive. A different type of intervention for inhibiting operation of the converter is not ruled out, however.
In a practical form of embodiment, the current detection circuit comprises storing means for storing an essentially direct voltage, which is a function of to the current flowing through the electronic chopper and an alarm signal generator, which generates said alarm signal when the voltage stored in the storage means exceeds a predetermined value. The voltage stored represents the essentially direct signal according to the current output to the load.
According to an advantageous form of embodiment, the current detection circuit may present a first electronic switch, e.g. a p-channel MOSFET, which will hereof be called first detection switch, by which the detection circuit is connected on the output side of the electronic chopper. A second electronic detection switch, similar to the first, may be provided, which connects the current detection circuit to the chopper input. The two detection switches are controlled by a PWM signal, which is appropriately synchronised with the chopper PWM signal. In this arrangement, the detection circuit is connected to the chopper only when the chopper is conducting.
In a practical form of embodiment, the detection circuit comprises a first transistor, interposed between the electronic chopper input side and a first capacitor, and whose closure is controlled by the value of the voltage on the chopper terminals. The second electronic detection switch mentioned above is interposed between the electronic chopper input side and said transistor. Consequently, the capacitor in the current detection circuit can be isolated to ensure detection only during chopper conduction.
In order to generate an essentially direct signal, according to the current output by the converter during chopper conduction, for example, a second capacitor on whose terminals an essentially direct voltage is established dependent on the current output by said converter may be provided. This capacitor is connected to the chopper output via the first detection switch so that a voltage according to the converter input voltage, to the chopper voltage drop and consequently to the current output to the load, is established between its two armatures.
The detection circuit may advantageously comprise an additional transistor arranged between the first electronic detection switch and a voltage divider, and whose base and emitter are appropriately connected to said second capacitor, so that said second transistor is held in nearly saturated condition and that the base of said first transistor

2

is connected to said voltage divider. As clearly appears in the following detailed description, the voltage divider is used to set the required threshold value exceeding which the current detection circuit generates the alarm signal.

Additional advantageous characteristics and forms of embodiment of the circuit according to the invention are illustrated in the accompanying claims.

Brief description of the drawings

The invention will be better understood by reading the following description, reference being made to the enclosed drawing, which shows a practical non limiting embodiment of the invention. More particularly, in drawings:

- Fig. 1 shows a general block chart of the converter and location of the detection circuit,
- Fig. 2 shows a simplified electric diagram of the current detection circuit and
- Fig. 3 shows the pattern of some waveforms in the circuit illustrated in Fig. 2.

Detailed description of a form of embodiment

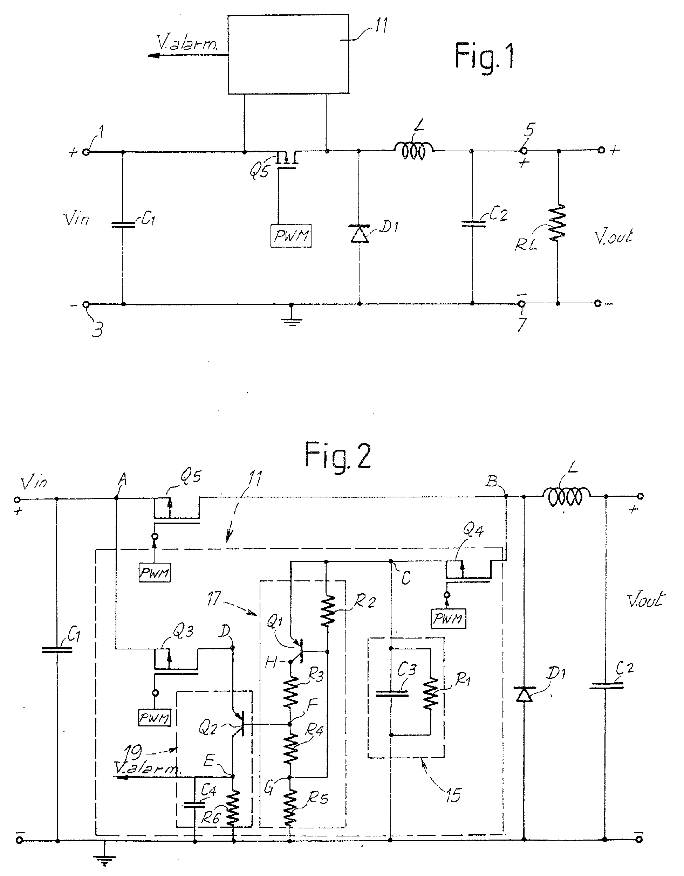

Fig. 1 shows a DC/DC step-down converter in the simplified form of a block chart. Reference numerals 1 and 3 indicate the input terminals to which a direct voltage $V_{in}$ is applied, while reference numerals 5 and 7 indicate the output terminals on which a voltage $V_{out}$ is generated. Reference $R_L$ schematically indicates a resistor, which represents the load applied to the converter and is powered by the output voltage generated by the converter.

Reference $C_1$ indicates the bulk capacitor and $C_2$ the output capacitor. An inductor L is arranged between the input terminal 1 and the output terminal 5. An electronic chopper, indicated with reference $Q_5$, is arranged between the inductor L and the input terminal. Switching of the chopper is adequately controlled by a PWM signal which determines the value of the current applied to the load $R_L$. The duty-cycle of the PWM signal is increased or decreased to either increase or decrease the conduction time of the chopper $Q_5$. A recirculation diode $D_1$ is arranged between the drain terminal of the electronic chopper and $Q_5$ and the common earth reference.

The operation of a converter configured in this way is known to the skilled in the art and will not be described in greater detail herein.

A current detection circuit, schematically illustrated in Fig. 1 by block 11 and described in greater detail with reference to Fig. 2, which illustrates a form of embodiment of said circuit, is connected to the terminals of the chopper $Q_5$.

The current detection circuit 11 comprises a first electronic switch $Q_4$, herein referred to as the first electronic detection switch, consisting of a p-channel MOSFET, whose switching is synchronously controlled with the chopper $Q_5$, by the same PWM signal. The drain of MOSFET $Q_4$ is connected to a point B between the chopper switch $Q_5$ and the inductor L. The source of MOSFET $Q_4$ is connected in a point C to a storage circuit, generically indicated with reference number 15, consisting of a capacitor $C_3$ in parallel to a resistor $R_1$. Additionally, the emitter of a transistor $Q_1$ and a resistor $R_2$, interposed between point C and the base of the transistor $Q_1$, are connected to said point C. The transistor $Q_1$ is part of a network which is generically indicated with reference numeral 17 and comprises a voltage divider. The collector of the transistor $Q_1$ is connected to a branch containing three resistors in series $R_3$, $R_4$, $R_5$ forming the voltage divider, while the base of the transistor $Q_1$ is connected to a point G between the resistor $R_4$ and the resistor $R_5$.

The base of an additional transistor $Q_2$, which is part of an alarm generating circuit, indicated 19 as a whole, is connected to point F between the resistor $R_3$ and the resistor $R_4$. The collector of the transistor $Q_2$ is connected in point E to a RC cell, consisting of a capacitor $C_4$ in parallel to a resistor $R_6$, which are part of said alarm generator 19.

The emitter of the transistor $Q_2$ is connected to a point A of the converter input voltage $V_{in}$ via a second electronic detection switch, consisting of a p-channel MOSFET, indicated with reference $Q_3$. Switching of MOSFET $Q_3$ is controlled by a PWM signal, which is synchronised with the PWM signals controlling the MOSFETs $Q_5$ and $Q_4$.

The current detection circuit 11 is based on the following principle. The voltage drop across MOSFET $Q_5$ is read dynamically by MOSFETs $Q_3$ and $Q_4$ when MOSFET $Q_5$ is conducting. Direct signals needed to control the transistors $Q_1$ and $Q_2$ are appropriately generated by this alternating signal. The conduction status of the transistor $Q_2$ depends on the voltage drop on the MOSFET $Q_5$. When the current output by the converter to the load $R_L$, and consequently the voltage drop of the MOSFET $Q_5$ exceeds a certain threshold, transistor $Q_2$ totally conducts and permits charging of capacitor $C_4$. In this way, the voltage in point E rises to a value which is approximately equal to the input voltage $V_{in}$. This voltage is the alarm signal generated by the current detection circuit 11 and may be used in various ways, e.g. to activate an overcurrent protection which inhibits operation of the converter by switching the chopper MOSFET $Q_5$ to constant inhibit.

The following considerations are provided to better understand the operation of the current detection circuit 11.

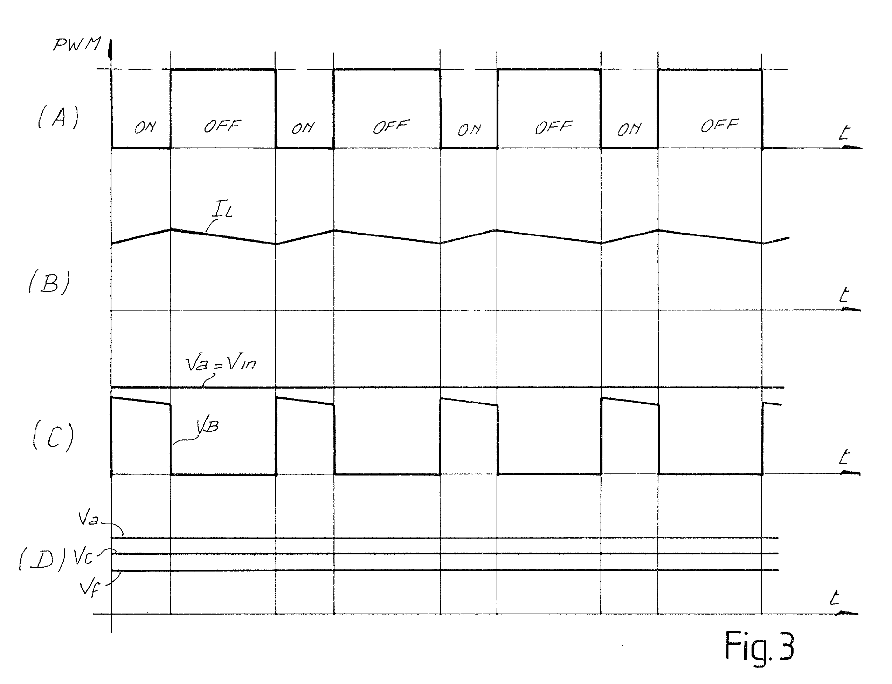

The chopper MOSFET $Q_5$ is alternatively switched to conduct and inhibit by a PWM signal whose pattern is shown in diagram (A) of Fig. 3. A voltage pattern in point B, downstream to the MOSFET $Q_5$, shown in diagram (C) of Fig. 3 and there indicated by reference $V_B$, corresponds to said pattern. The input voltage $V_{in}$, coinciding with the voltage in point A, indicated by reference $V_A$, is shown in the same diagram. The difference between $V_A$ and $V_B$ is represented by the voltage drop at the terminals of the MOSFET chopper $Q_5$ and is proportional to the current output to the load $R_L$ during MOSFET conduction. Diagram (B) in Fig. 3 represents the pattern of current in inductor L, while diagram (D) in the same figure shows the voltages $V_A$, $V_C$ and $V_F$ in points A, C and F of the circuit. The voltage $V_C$ in point C of the current detection circuit 11 is a direct voltage, determined by the load stored in capacitor $C_3$ while MOSFET $Q_4$ is in its conduction phases, which are synchronised with the conduction phases of the MOSFET chopper $Q_5$.

Neglecting the voltage drops on the MOSFETs $Q_3$ and $Q_4$ and considering only the conduction phases of the MOSFETs $Q_3$, $Q_4$, $Q_5$, the following simplified equations can be used to determine the voltage in the various points of the circuit. The voltage $V_D$ in point D of the circuit is constant and approximately results from:

$$V_D \approx V_A = V_{in} \tag{1}$$

The voltage in point B is given by:

$$V_B = V_A - I_{ON} * R_{dsONQ5} \tag{2}$$

where
$I_{ON}$ is the current crossing the MOSFET $Q_5$ during conduction and
$R_{dsONQ5}$ is the resistance between the drain and the source of the MOSFET $Q_5$. Voltage in point C approximately results from:

$$V_C \cong V_B = V_A - I_{ON} R_{dsONQ5} \tag{3}$$

The resistors $R_2$, $R_3$, $R_4$, $R_5$ have a value suitable for ensuring that the transistor $Q_1$ is constantly polarised in a saturation zone. Consequently, the voltage difference between the emitter and the collector of the transistor $Q_1$ is:

$$V_{EC1} = V_{EC1SAT} \cong 0.2 \div 0.3 \text{ V}$$

where $V_{EC1SAT}$ indicates the saturation voltage between emitter and collector. Similarly, in point G, between the resistors $R_4$ and $R_5$ in series, the voltage is equal to the voltage $V_C$ in point C decreased by the voltage between the base and the emitter of the transistor $Q_1$. This voltage is equal to approximately 0.8 V since the transistor $Q_1$ is saturated. Consequently:

$$V_G = V_C - V_{EB1SAT} = V_A - I_{ON} R_{dsONQ5} - V_{EB1SAT} \tag{4}$$

where $V_{EB1SAT}$ is the voltage difference between emitter and base of the transistor $Q_1$ in saturated conditions. The voltage $V_F$ in point F can be obtained by considering the dividing effect of the voltage by the resistors $R_3$ and $R_4$ with reference to the voltage drop in points H (at voltage $V_H$) and G (at voltage $V_G$) to which the voltage $V_G$ in point G is summed. The equations are:

$$V_H - V_G \cong V_{EB1SAT} - V_{EC1SAT} \cong 0.8 - 0.3 = 0.5V \text{ (constant)} \tag{5}$$

and

$$V_F = V_G + (V_{EB1SAT} - V_{EC1SAT}) R_4/(R_3 + R_4) \tag{6}$$

Voltage in point F, expressed as follows, results from the equations above:

$$V_F = V_A - I_{ON} R_{dsONQ5} - V_{EB1SAT} + (V_{EB1SAT} - V_{EC1SAT} R_4/(R_3 + R_4) \tag{7}$$

where all terms are fixed, with the exception of $I_{ON} R_{dsONQ5}$ which depends on the value of the current output by the converter to the load. The voltage value $V_F$ in point F of the circuit regulates the conduction status of the transistor $Q_2$, because the voltage between base and emitter of $Q_2$ is given by:

$$V_{EBQ2} = V_D - V_F = V_A - V_F \tag{8}$$

and consequently according to equation (7):

$$V_{EBQ2} = I_{ON} R_{dsONQ5} + V_{EB1SAT} - (V_{EB1SAT} - V_{EC1SAT}) R_4/(R_3 + R_4) \tag{9}$$

Consequently, the conduction status of the transistor $Q_2$ depends on the value of $I_{ON}$, i.e. on the output current and the resistance value of the divider $R_3$, $R_4$. The output current value for which the circuit 11 generates the alarm signal can be determined by appropriately selecting the values of these resistors. The voltage $V_A = V_{in}$ is mainly concentrated between emitter and collector of transistor $Q_2$ and the capacitor $C_4$ is charged at a very low voltage, for which the output signal of the circuit 11 ($V_{alarm}$), i.e. the voltage value in point E, is extremely low, as long as the current $I_{ON}$ holds the voltage $V_{EBQ2}$ between the base and the emitter of transistor $Q_2$ at a value which does not ensure conduction of the transistor $Q_2$.

Conversely, when the current $I_{ON}$ takes transistor $Q_2$ to full conduction and consequently to saturation, the voltage $V_{EC2}$ between emitter and collector of the transistor $Q_2$ becomes very low (approximately in the range from 0.2 V to 0.3 V) and the capacitor $C_4$ is charged at a voltage which is practically identical to the input voltage $V_{in}$. This high voltage (indicated by $V_{alarm}$ in the figure) is an alarm signal and can be used to cut off current output by the converter, e.g. by inhibiting the circuit generating the PWM signal for controlling the chopper MOSFET $Q_5$.

Analytically, the value of the current on the load for which the alarm signal trips is given by:

$$I_{ONMAX} \cong \frac{1}{R_{dsONQ5}} \left[ V_{EB2SAT} - V_{EB1SAT} + (V_{EB1SAT} - V_{EC1SAT}) \frac{R_4}{R_3 + R_4} \right] \tag{10}$$

and, since $V_{EB2SAT} = V_{EB1SAT}$:

$$I_{ONMAX} = \frac{(V_{EB1SAT} - V_{EC1SAT}) R_4}{(R_3 + R_4) R_{dsONQ5}} \tag{11}$$

and therefore the current for which the circuit generates the alarm signal can be set by operating on the values of resistors $R_3$ and $R_4$.

It is noted that the drawing is provided by the way of an example only and that numerous changes can be implemented to the construction and embodiments of the invention herein envisaged without departing from the scope of the present invention. The presence of reference numerals in the annexed claims has the purpose of facilitating comprehension of the claims with reference to the description and does not limit the scope of protection represented by the claims.

## Claims

1. A DC/DC converter comprises:

   - an electronic chopper ($Q_5$) which is periodically switched to control the voltage generated by the converter on a load ($R_L$) and
   - a detection circuit (11) for detecting the current output by the converter and generating an alarm signal when the output current exceeds a threshold value,

**characterised in that** said detection circuit is connected to the terminals of the electronic chopper, detects the voltage drop across said electronic chopper during the conduction phases thereof and generates an essentially direct signal, whose value is a function of said voltage drop.

2. Converter according to claim 1, **characterised in that** it comprises means ($R_6$; $C_4$; $Q_2$) for generating an alarm signal when the current output to the load exceeds a predetermined threshold.

3. Converter according to claim 1 or 2, **characterised in that** said current detection circuit (11) comprises storage means ($C_3$, $R_1$) for storing a voltage according to the current flowing through said electronic chopper ($Q_5$) and an alarm signal generator (19), which generates said alarm signal when the voltage stored by said storage means drops under a predetermined threshold.

4. Converter according to claim 1, 2 or 3, **characterised in that** it comprises a first electronic detection switch ($Q_4$) which connects the detection circuit to the output side of the electronic chopper ($Q_5$), the switching of said first electronic detection switch being controlled synchronously with the electronic chopper.

5. Converter according to claim 3 and 4, **characterised in that** said first electronic detection switch ($Q_4$) connects said storage means ($C_3$, $R_1$) to the electronic chopper ($Q_5$).

6. Converter according to claim 4 or 5, **characterised in that** it comprises a second electronic detection switch ($Q_4$), which connects the detection circuit to the input side of the electronic chopper ($Q_5$), the switching of said second electronic detection switch being controlled synchronously with said electronic chopper.

7. Converter according to claim 6, **characterised in that** said second electronic detection switch ($Q_3$) connects said alarm signal generator (19) to the converter input.

8. Converter according at least to claim 6, **characterised in that** it comprises a single PWM control for controlling the electronic chopper and said first and second electronic detection switches.

9. Converter according to at least claim 3, **characterised in that** said alarm signal generator comprises a first transistor ($Q_2$) interposed between the input side of the electronic chopper ($Q_5$) and a first capacitor ($C_4$), and whose closure is controlled by the value of said essentially direct signal, when said essentially direct signal drops under a predetermined value.

10. Converter according to claim 6 and 9, **characterised in that** said second electronic detection switch ($Q_3$) is interposed between the input side of the electronic chopper and said first transistor ($Q_2$).

11. Converter according at least to claim 5, **characterised in that** said first electronic detection switch ($Q_4$) is connected to a second capacitor ($C_3$), which is part of said storage means, on whose terminals an essentially direct voltage, which is a function of the current crossing said electronic chopper ($Q_5$), is established.

12. Converter according to claim 9, **characterised in that** said current detection circuit comprises a network ($R_2$, $R_3$, $R_4$, $R_5$, $Q_1$) with a voltage divider interposed between the storage means and said first transistor ($Q_2$).

13. Converter according to at least claim 12, **characterised in that**:

said detection circuit comprises an additional transistor ($Q_1$) interposed between the first electronic detection switch ($Q_4$) and said voltage divider ($R_3$, $R_4$), whose emitter is connected to said second capacitor ($C_3$), said second transistor being held in saturated condition; and **in that** the base of said first transistor is connected to said voltage divider and to said second capacitor ($C_3$) by means of a resistor ($R_2$).

14. Converter according to one or more of the claims above, **characterised in that** said electronic chopper is a power p-channel MOSFET.

15. Converter according at least to claims 4 and 6, **characterised in that** said first and second electronic detection switch are p-channel MOSFETs.

Fig.1

Fig.2

Fig. 3

EP 1 333 562 A1

EP 1 333 562 A1

**European Patent Office**

**EUROPEAN SEARCH REPORT**

Application Number

EP 02 42 5054

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | PATENT ABSTRACTS OF JAPAN vol. 2000, no. 20, 10 July 2001 (2001-07-10) & JP 2001 078439 A (MURATA MFG CO LTD), 23 March 2001 (2001-03-23) * abstract; figure 1 * | 1-3,5,7, 9-15 | H02M1/00 G05B19/07 H02M3/158 |
| Y | US 4 394 148 A (RYAN WILLIAM H) 19 July 1983 (1983-07-19) * figure 2 * * column 2, line 1 - line 4 * * column 2, line 60 - line 68 * * column 3, line 1 - line 4 * * column 5, line 12 - line 43 * | 1-3,5,7, 9-15 | |
| A | US 6 160 388 A (CHIU CHAO-CHIH ET AL) 12 December 2000 (2000-12-12) * abstract * * figure 1 * * column 1 * * column 2, line 1 - line 6 * * column 2, line 60 - line 62 * * column 3, line 24 - line 29 * | 1-3 | |
| A | EP 1 079 507 A (MATSUSHITA ELECTRIC IND CO LTD) 28 February 2001 (2001-02-28) * abstract * * figure 1 * * paragraphs '0011!,'0012!,'0024! * | 1 | TECHNICAL FIELDS SEARCHED (Int.Cl.7) H02M G05B |
| E | US 6 366 068 B1 (MORISHITA YASUNOBU) 2 April 2002 (2002-04-02) * the whole document * | 1-3,5,7, 9-15 | |

The present search report has been drawn up for all claims

| Place of search | Date of completion of the search | Examiner |
|---|---|---|
| MUNICH | 1 July 2002 | Zettler, K-R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

9

**ANNEX TO THE EUROPEAN SEARCH REPORT
ON EUROPEAN PATENT APPLICATION NO.**

EP 02 42 5054

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2002

| Patent document cited in search report | | Publication date | Patent family member(s) | | Publication date |
|---|---|---|---|---|---|
| JP 2001078439 | A | 23-03-2001 | US | 6366068 B1 | 02-04-2002 |
| US 4394148 | A | 19-07-1983 | AU | 8896982 A | 19-05-1983 |
| | | | BR | 8206210 A | 20-09-1983 |
| | | | DE | 3239628 A1 | 05-05-1983 |
| | | | ES | 516796 D0 | 01-03-1984 |
| | | | ES | 8403092 A1 | 01-06-1984 |
| | | | FR | 2515375 A1 | 29-04-1983 |
| | | | GB | 2110014 A | 08-06-1983 |
| | | | IT | 1148429 B | 03-12-1986 |
| | | | JP | 58084133 A | 20-05-1983 |
| | | | ZA | 8207264 A | 28-09-1983 |
| US 6160388 | A | 12-12-2000 | NONE | | |
| EP 1079507 | A | 28-02-2001 | JP | 2000245141 A | 08-09-2000 |
| | | | EP | 1079507 A1 | 28-02-2001 |
| | | | US | 6307360 B1 | 23-10-2001 |
| | | | CN | 1294773 T | 09-05-2001 |
| | | | WO | 0051226 A1 | 31-08-2000 |
| US 6366068 | B1 | 02-04-2002 | JP | 2001078439 A | 23-03-2001 |

EPO FORM P0459

For more details about this annex : see Official Journal of the European Patent Office, No. 12/82